# EUROPEAN PATENT SPECIFICATION

(11) **EP 3 256 654 B1**
(45) Date of publication and mention of the grant of the patent: **09.10.2019**
(21) Application number: 16707622.3
(22) Date of filing: 12.02.2016
(51) Int. Cl.: E03F 7/04, F16K 15/03

(54) **A DOUBLE VALVE DEVICE FOR THE PREVENTION OF BACKFLOW AND METHOD OF ITS USE**
DOPPELVENTILVORRICHTUNG ZUR VERHINDERUNG DES RÜCKFLUSSES UND VERFAHREN ZU DEREN VERWENDUNG
DISPOSITIF À DOUBLE CLAPET DESTINÉ À EMPÊCHER UN REFLUX ET SON PROCÉDÉ D'UTILISATION

(30) Priority: 13.02.2015 DK 201570083
(43) Date of publication of application: 20.12.2017
(73) Proprietor: Fla Invest APS, 2900 Hellerup (DK)
(72) Inventor: ANDERSEN, Flemming Lind, 2900 Hellerup (DK)
(74) Representative: Kjerrumgaard, Lars Bo
(86) International application number: PCT/DK2016/050038
(87) International publication number: WO 2016/128001

(56) References cited:
- EP-B1- 0 307 698
- AT-U1- 9 519
- DE-A1- 3 120 996
- DE-U1- 9 413 322
- FR-A- 523 500
- US-A- 3 109 450
- US-A- 4 800 917
- US-A1- 2014 150 904

## Description

The present invention relates to a double valve device for the prevention of backflow by mounting in a flow channel of a sewer according to the preamble of claim 1. The double valve device is preferably an anti-flood valve. The sewer has an intake pipe and an outfall pipe for sewage and/or water and the double valve device comprises an elongated hollow valve body and an actuator.

One of the most challenging demands of building-drainage is to prevent backflow of water. Anti-flood valves are used to prevent such backflow of water from a.o. entering rooms that lie under sewer level and being equipped with drainage facilities. It is e.g. known to install such a valve in e.g. a sewer pipe or drain pipe extending from a house or other building to a street sewer pipe or the like, which valve will automatically close when sewage flows back from the street sewer pipe towards the house or building structure thereby preventing backflow from the sewer pipe into the house, and thereby protecting the basement or other lower portions of the house or building structure from becoming flooded.

DE 9413322 U1 discloses a backflow device in a cleaning shaft of a sewage pipe, which can be closed by a cover.

EP 0307698 B1 discloses a cleaning shaft for continuous sewage pipelines, which is designed as a kit.

DE 3120996 A1 discloses a lock, in particular a backflow lock for pipelines, whereby a pressure chamber can be formed on one side of the lock member.

US 2014/150904 A1 discloses a check valve module which includes an orifice that is configured to allow the water flow stream through the check valve module.

AT 9519 U1 discloses a backflow lock for installation I a liquid carrying pipe, such as a waste water pipe.

FR 523500 A discloses a closing box of a pipeline against flooding of high water. The box is used to prevent high water to enter the cellar through the pipe.

US patent no. 4,272,640 discloses such a known valve which is motor-actuated and includes a vertically reciprocal gate controlled by a float-operated switch structure disposed downstream of the valve to quickly and positively move the valve to fully closed position upon flood conditions existing in the lateral sewer pipe downstream of the valve, thereby preventing backflow and flood conditions occurring on the house side or upstream of the valve. A motor-operated pump and chopper unit communicates with the sewer pipe on the house side of the valve and discharges through a bypass line with a one-way flap valve therein to the street side of the valve in order to pump sewage around the valve when it is closed, thereby enabling sewage to be discharged from the house side of the valve to the street side of the valve even when the gate valve is closed, thereby enabling normal operation of the facilities in the house or other building, which discharges sewage into the sewer line. This known system relies on a power supply to drive the motor and pump, and on a bypass line to redirect pumped sewage. In case of power failure this system will fail to work properly.

As an alternative US patent no. 4,800,917 discloses a non-electric fluid-actuated gate valve assembly of the type intended for interposition between a static structure and a municipal sewer line to prevent sewer backwash in flood conditions. The water intake pipe has a fluid-actuated gate valve assembly associated therewith. Similar is not disclosed nor suggested for the outfall pipe. The gate valve assembly is formed by gate means for alternately opening and closing the water intake pipe, and fluid-actuated control means in operative relation with the gate means and being in fluid communication with the source of fluid under pressure such that the gate means is operated by a fluid under pressure in response to the sewer water level within the enclosed chamber thereby to open and close the gate means alternatively, and in response to the water level within the enclosed chamber. This alternative system has numerous components exterior to the sewer, which components take up space and are exposed, and thus vulnerable to damages from exterior influences and actions.

US patent no. 3,109,450 discloses a check valve for insertion into a fluid conduit for the purpose of preventing reverse flow therethrough. This document is considered to represent the closest prior art. The features described in the preamble of claim 1 are disclosed in said document.

The shortcomings and disadvantages of the prior art sewer backup systems and devices leave a need for improvements.

In a first aspect of the present invention is provided a double valve device as a sewer backup system that prevents flooding and backflow of sewage to e.g. the basement of a house.

In a second aspect of the present invention is provided a double valve device configured for being inserted in a drain pipe associated with a sewer, preferably in a drain pipe having an intake pipe to the sewer and an outfall pipe from the sewer.

In a third aspect of the present invention is provided a self-contained double valve device that operates in response to fluid pressure, thus having fluid-actuated valve components.

In a fourth aspect of the present invention is provided a double valve device with no components outside an upper access opening to the sewer once the double valve device is installed.

In a fifth aspect of the present invention is provided a double valve device also useful as a pest guard, in particular as rat guard, in a sewer.

In a seventh aspect of the present invention is provided a double valve device, the function of which can be monitored from a remote location.

In an eight aspect of the present invention is provided a double valve device that can be operated manually on occasion.

In a ninth aspect of the present invention is provided a double valve device that can be raised and lowered from a sewer on demand, optionally be moved from sewer to sewer.

The novel and unique whereby these and other aspects are achieved according to the present inventions consist in that
- the elongated hollow valve body includes a first elongate hollow member defining a first channel and a second elongate hollow member defining a second channel, opposite the first channel,
- an actuator operatively connected to the elongate hollow valve body to allow adjusting the distance between the first elongated hollow member and the second elongate hollow member upon actuation,
- the first elongate hollow member has a first flap valve pivotally between a closed state and an open state of a first valve opening of the first elongate hollow member, and
- the second elongate hollow member has a second flap valve pivotally between a closed state and an open state of a second valve opening of the second elongate hollow member, which second valve opening faces the first valve opening.

A conventional sewer for receiving wastewater from a dispose unit, such as a house or larger building, has a waste receiving intake pipe that guides waste water from the house or building into the sewer, and a sewer outfall pipe in fluid communication with the public sewage network system.

Within the context of the present invention the term "sewer" is an artificial conduit located in the ground and suited to carry off sewage and sometimes surface water, as e.g. from rainfall, away from a building. The sewer most often is an insert in a hole in the ground. This insert has a more or less long shaft, such a plastic pipe coupled to a base, where intake pipe and outfall pipe are lateral to the base.

The two flap valves serve as non-return valves making the double valve device an automatic self-contained valve device when installed in a sewer pipe or drain pipe to prevent backflow of sewage and flooding of e.g. a basement or other low areas of a house or building structure resulting from such backflow. When the water level raises in the sewer, e.g. in case of heavy rain, melt water or flooding, the water column pressure contributes to force at least the first flap valve to close the first opening of the first elongate hollow member so that backflow from the sewer to a house cannot occur.

For installing the double valve device in the sewer the double valve device is immersed in the sewer with the actuator in non-actuated state. Immersion commence until an actuation position of the double valve device is reached, which actuation position is when the first elongate hollow member is axially aligned with the intake pipe and the second elongate hollow member is axially aligned with the outfall pipe. Once the actuation position is reached the actuator is actuated to slide the first elongate hollow member and the second elongate hollow member apart along the slide member, so that said hollow members are moved apart and inserted at least partly into the intake pipe and the outfall pipe, respectively. The actuator maintains an actuated, locked position while the double valve device is installed in the sewer to allow the flap valves to act in response to water and sewage levels and pressures. So the first flap valve operates to alternately open and close the first valve opening of the first elongate hollow member, and/or the second flap valve operates to alternately open and close the second valve opening of the second elongate hollow member, in response to the rise or lowering of the water level in the sewer, and thus to also open and close the intake pipe and the outfall pipe.

Preferably the exterior diameter of at least the end of the first elongate hollow member opposite the first flap valve is selected to fit well, preferably fit to engage, inside the interior diameter of the intake pipe, and the exterior diameter of at least the end of the second elongate hollow member opposite the second flap valve is selected to fit well, preferably fit to engage, inside the interior diameter of the outfall pipe, which fitting is intended to prevent bypass of water and sewage between pipes and elongate hollow members. Optionally a gasket can be provided on an elongate hollow member to seal between pipes and hollow members, but conventional intake pipes and outfall pipes have standard measures in accordance to which the elongate hollow member are designed to fit with minimum circumferential clearance. Optionally gaskets can be provided for the flap valves as well.

The actuator may be, or comprise, one or more of a toggle mechanism, a spindle, an electric motor, a spring mechanism, a pneumatic motor or a hydraulic motor, alone or in combination.

In an embodiment that is particular easy to actuate by the actuator the second channel is arranged opposite the first channel in the same or different plane so that the second valve opening faces towards the first valve opening.

To facilitate the required sliding the slide member may have a bar member, a first coupling member associated with the first elongate hollow member and a second coupling member associated with the second elongate hollow member. One of the first coupling member and the second coupling member can be slidable mounted to the bar member whereas the other coupling member can be fixed to the bar member, so that the bar member also becomes fixed to the corresponding elongate hollow member. When spreading apart the first elongate hollow member and the second elongate hollow member by activating the actuator the bar member slides inside the respective coupling member to which it is not fixed. Alternatively, the bar member may be so long that both coupling members can slide on it. In this embodiment the slide member may have an end collar on one or both ends to keep the coupling members from sliding off the bar member.

An expedient toggle mechanism may comprise several interconnected linkage members forming an articulation that transfers and converts a force applied to the toggle mechanism in one direction into oppositely directed forces on the first elongate hollow member and on the second elongate hollow member to displace those in opposite directions.

Within the context of the present invention a "toggle mechanism" operates through a linkage system of linkage members and pivots, which linkage members serve as levers that can move between a actuated clamped lock mode and a non-actuated relaxed mode.

To that aspect a toggle mechanism may include
- a first linkage member pivotable secured to or at the first coupling member at a first pivot axis,
- a second linkage member pivotable secured to or at the second coupling member at a second pivot axis,
- the first linkage member and the second linkage member are pivotable connected to each other at a third pivot axis opposite the respective first coupling member and the second coupling member, and
- a third linkage member having a free end and an opposite operating end, which opposite operating end is connected to at least one of the first linkage member or the second linkage member, optionally connected at the third pivot axis, to move the first pivot axis and the second pivot axis apart along the bar member.

Fixed-length linkage members are connected, e.g. by pivot pins, to supply the locking action and the clamping force. The toggle action includes a lock position, which is a fixed stop position in the locked mode. Once in the lock position, the toggle mechanism cannot move or unlock unless the linkages are unlocked and the actuator allowed to assume the relaxed mode. The maximum clamping or exerting force developed in the toggle mechanism is obtained when the three pivot points or pivot axis of the mechanism are in a substantial straight line or maximum spread. The proper amount of travel to the lock position of maximum desired spreading to produce maximum holding force, and yet ensure positive locking, is a carefully calculated and controlled dimension also taking account of the diameter of the sewer.

Any of the first linkage member, the second linkage member and the third linkage member may included additional sub-linkage members, so as to obtain a toggle mechanism that can span larger diameters. So for example a linkage member can consist of a two or more mutually pivotally connected sub-linkage members.

When the double valve device has been lowered and have reached the fully actuated position, the first elongate hollow member and the second elongate hollow member are e.g. horizontally inserted more or less inside the intake pipe and the outfall pipe, respectively. The direction of the actuation force to achieve these positions is e.g. substantial vertical for a vertical sewer. So the direction of the force required for actuation of an actuator, such as e.g. a toggle mechanism, is substantially perpendicular to a common axis of the longitudinal axis of the first elongate hollow member and the second elongate hollow member. The actuation force applied to the free end of the third linkage member, or similar component designed to be manipulated to activate the actuator, is transferred via the operating end of the third linkage member to the first linkage member and the second linkage member to slide the first elongate hollow member along the bar member to be secured inside the intake pipe. Since the first linkage member and the second linkage member are pivotably connected to each other at the third pivot axis the actuation force at the same time moves the second linkage member along the bar member to secure the second elongate hollow member inside the outfall pipe. When the double valve device is fully installed in the sewer the first linkage member and the second linkage member are in expanded state, in substantially straight extension of each other, thus substantially horizontal as well, and keep this arrangement during the period of installation. In the relaxed non-actuated condition before and under lowering into the sewer the angle between the first linkage member and the second linkage member at the third pivot axis is a first angle less than or equal to 90°. When the toggle mechanism is fully actuated and locked with the first elongate hollow member and the second elongate hollow member spread apart and fully installed in the appropriate pipes, the angle between the first linkage member and the second linkage member is a second angle substantially increased in relation to the first angle, thus the second angle is larger than 90°, and may even be larger than e.g. 160°, such as even be larger than 170°.

The third linkage member serves as an easy accessible extension of the second linkage member and is useful as an operating member for actuating the actuator, e.g. the toggle mechanism.

The third linkage member may also posses a handle function. The second linkage member operates the sliding of the second coupling member on the bar member to spread apart the first and second elongate hollow members. In an embodiment wherein the first coupling member are fixed to the bar member and/or otherwise fixed to the first elongate hollow member the first linkage member is forces away from the second linkage member due to this fixation. In an alternative embodiment where the bar members have end stops both coupling member may be able to slide, although not mandatory, and in such case the end stops will efficiently prevent the coupling members from displacing off the bar member and instead bring the elongate hollow members along and away from each other.

In one embodiment the first coupling member can be at least one first pipe or ring, the second coupling member can be at least one second pipe or ring, and the bar member can be at least one bar that extends through said at least one first pipe or ring and the at least one second pipe or ring.

The at least one bar can be secured to said at least one of the first or second pipe or ring, or be secured in a similar manner to the first or second elongate hollow member, to allow sliding of the first coupling member away from the second coupling member on the bar member to move the first elongate hollow member and the second elongate hollow member to and fro each other by operating an actuator, such as e.g. by applying a force to a toggle mechanism to position the first elongate hollow member inside the intake pipe and the second elongate hollow member inside the outfall pipe by depressing, optionally turning, the third linkage member. By sliding the second coupling member on the bar member the direction of movement of the elongate hollow members can be guided and controlled during installation of the double valve device.

Instead of using a first pipe or ring as the first coupling member for securing the bar member to the first elongate hollow member, the bar member can be directly secured to the first elongate hollow member so that just the second coupling part can slide on the bar member. The opposite situation that the first coupling member can slide on the bar member and the second coupling member be fixed to the bar member is also within the scope of the present invention.

In an expedient embodiment the first elongate hollow member may have a first floater operatively connected to the first flap valve to open and close the first channel in response to changes in liquid flow or liquid level in at least one of the flow channel and the sewer. Similarly the second elongate hollow member may have a second floater operatively connected to the second flap valve to open and close the second channel in response to changes in liquid flow or liquid level in at least one of the flow channel and the sewer. The buoyancy of a floater will cause a floater to rise in the sewer, which moves a flap valve linked to the floater to fully or partly close for water flow through an elongate hollow member, and thus the part of the associated part of the flow channel. Accordingly, backflow is prevented or even made impossible, moreover rats cannot invade the sewage system when the flap valves are down to close in front of an opening. A flap valve is operated automatically by its associated floater to close the double valve device. If the sewer is empty to an extent that allows a floater to be down, e.g. being in a non-floating position, a flap valve will be fully open, thus in a position where the flap valve is pivoted towards and below the bar member so as to not obstruct sewage and/or water flow through and out of the sewer.

The shape of the floaters and there position on the double valve device are selected so that they can rise and fall without contacting the interior wall of the sewer. Also the buoyancy of the floaters is selected so that the floaters can rise sufficiently to close the flap valves for the channels of the elongate hollow members.

Preferably the first elongate hollow member has a sloped first end at the first valve opening so that the travel of the first flap valve is reduced if closing of the first channel is started. Optionally the second elongate hollow member has a sloped second end at the second valve opening to easier guide the second flap valve inside the second elongate hollow member when sewage or water is discharged.

To allow the above movement of a flap valve in response to the actual movement of a floater the first elongate hollow member may have a first suspension bracket operatively connected to a first pivot arm provided on the first floater, which first pivot arm is operatively connected to the first flap valve, optionally via a first articulation, and the second elongate hollow member may have a second suspension bracket operatively connected to a second pivot arm provided on the second floater, which second pivot arm is operatively connected to the second flap valve, optionally via a second articulation. The actuator takes up substantial space so that only limited space is left with the double valve device for a means that connects the flap valve and the floater in the required manner that allows transferring the movement of the floater to movement of the flap valve. The articulations takes up limited space in the confined, narrow area or space above the elongate hollow member, and can e.g. be interposed with a toggle mechanism without having a negative impact on other components of the double valve device. An articulation allows the vertical displacement of a floater to be transmitted to its associated flap valve so that the flap valve is simultaneously pivoted.

The articulations may be replaced with a tooth gearing, optionally an encapsulated tooth gearing, or similar means that facilitates turning of a flap valve in response to the movement of the floater in the sewer.

As alternatives to a toggle mechanism, a spindle, an electric motor, a spring mechanism, a pneumatic motor or a hydraulic motor alone or in combination can be used. These alternatives can also be used together with a toggle mechanism. A motor may include electronic communication means to operate the actuator from a remote location. The double valve device may even be coupled to an operating system that allows it to be operated via a computer interface, which allows for central control of numerous valve devices at different locations from a common control station. Precautionary control of the valve devices may ward off damages by water as a result of flooding and backflow to the advantage of the society in general, and to house owners and insurance companies in particular. Indemnity for water damage, rehousing after water damages, etc. can be avoided by using the present invention to the benefit of the people and the society.

In a preferred embodiment of a double valve device, the double valve device may have at least two bar members having substantially parallel bar axis, and a first coupling member and a second coupling member for each bar member. In this preferred embodiment the first floater and the first elongate hollow member is provided in relation to a first bar member and the second floater and the second elongate hollow member is provided in relation to a second bar member of the two bar members. The first and the second bar member may have parallel slide axes that are in a slide plane for the respective coupling member(s).

The toggle mechanism, or other actuator, may have a protruding rod for keeping a floater, in particular the second floater, raised during immersing the double valve device into the sewer. During immersing of the double valve the distance between the first elongate hollow member and the second elongate hollow member is less than in the installed position of the double valve device. Preferably the protruding rod is positioned on the second linkage member to protrude therefrom as a stop or abutment for the second floater during lowering of the double valve device into the sewer.

In the non-actuated state of the toggle mechanism, or other actuator, the first elongate hollow member and the second elongate hollow member are closest to each other, however the buoyancy of the second floater cannot be utilised to keep the second floater raised if no water is present. So the second floater is kept lifted by a rod protruding from the non-actuated toggle mechanism or other actuator when being lowered for installation. Once the toggle mechanism or other actuator is actuated and linkage members depressed, so that the angle between the first linkage member and the second linkage member are increased, the protruding rod comes along and turns into a position that does not obstruct the further intended movement of the second floater and the second flap valve to open and close the second channel at the second elongate hollow member.

When a floater is in it's lowered position, it does not float, and the associated flap valve is in an open state of a respective valve opening of the respective elongate hollow member, and when a floater is in it's raised position it floats so that the associated flap valve is in a closed state of a respective valve opening of the respective elongate hollow member.

A sewer is often very narrow and deep, and thus almost inaccessible for a man to move around inside to install the double valve device. To operate and actuate the actuator from outside the sewer after the double valve device has been lowered to its actuation position inside the sewer the double valve device may comprise an actuator operating device.

The actuator operating device may in one embodiment be of the kind comprising
- a flexible clamp mechanism adapted to attach to the third linkage member,
- an upright guide tube to receive an elongated actuation member to depress the third linkage member of the actuator from outside the sewer to spread the first elongate hollow member and the second elongate hollow member apart and at least partly into the intake pipe and the outfall pipe of the flow channel of the sewer, and
- a lift member.

In one embodiment the flexible clamp mechanism may have a first clamp leg hingely connected to a second clamp leg to pivotably engage and disengage the engagement member of the third linkage member, and optionally the lift member can include a hook or eye for securing an external lift member to spread the first clamp leg and the second clamp leg to disengage the engagement member of the third linkage member.

The hinge that connects the first clamp leg and the second clamp leg may conveniently be spring-biased to make the connection between the actuator operating device and the third linkage of the toggle mechanism of the actuator flexible. The flexibility provides the advantage to the actuator operating device that said actuator operating device can be clicked to engage the third linkage member simply by pressing the actuator operating device towards a selected engagement member of the third linkage member to cause the first clamp leg and the second clamp leg to be parted against the spring force and to grasp by snapping onto the component of the third linkage member when the spring force is relieved. The hinge may be configured to elicit a noise that indicates that proper engagement has taken place.

In another embodiment the flexible clamp mechanism may have a first curved clamp leg extending in a S-shape into a second curved clamp leg to resiliently snap to engage and disengage the engagement member of the third linkage member, and optionally the lift member includes a hole through the upright pipe for securing an external lift member, e.g a suitable adapted elongated actuation member, or simply a rope used when immersing the double valve device.

The S-shaped clamp legs are the head of an inverted T-structure of a flexible clamp mechanism, which the upright guide tube is the stem. In the position seen down in the sewer, and when the double valve is ready to be actuated by the toggle mechanism or other actuator, the S-shaped clamp legs has a concave face and a convex surface, respectively. The concave surface acts on the third linkage member during activation and locking of the actuator, thereby forcing the first elongate hollow member and the second elongate hollow member apart. The concave surface acts on the third linkage member during deactivation of the actuator to move the first elongate hollow member and the second elongate hollow member together to raise the third linkage member from the locked condition of the actuator to a substantial vertical position. Due to the flexibility and curvature of the curved clamp legs, said clamp legs can easily be mounted and demounted the actuator, e.g. unsnap by proper twisting and turning. In this embodiment the engagement member may include two parallel rods arranged at a mutual distance selected so that the clamp leg having the concave surface is below one rod and the clamp leg having the convex surface is above the other rod, to that the S-shaped flexible clamping mechanism snaps to engage above and below these rods in use during actuation of the actuator.

Once the double valve device with the actuator operating device has been lowered to the intended position for actuation to spread the first elongate hollow member and the second elongate hollow member apart, an elongated actuation member, such as a long rod or bar, is introduced into the upright guide tube and used to actuate the actuator, such as the toggle mechanism. The elongated actuation member is pushed downwards thereby moving the third linkage member towards the bar member(s) and thus bringing the second pivot axis closer to the bar member(s) causing the first linkage member and the second linkage member to spread. The actuator operating device may be left on the double valve device or be detached from it to be reused for similar installations.

A lift member may serve to disengage the actuator operating device simply by pulling upwards, from outside the sewer, an attachment member such as a string, chain, wire or rope secured to the actuator operating device, so at e.g. to open the gap between the first clamp leg and the second clamp leg of the first embodiment of the flexible clamp.

The lift member may also be used to raise the double valve from the sewer, including removing for inspection and renovation of the sewer, or for replacement of the double valve device itself. To that aspect, if the actuator operating device has been detached previously, it is remounted to engage the actuator anew, and the attachment member used to haul the double valve device up the sewer by pulling the attachment member once the actuator has been unlocked.

The second embodiment of a flexible clamp can engage the actuator by snap-coupling and disengage by angling, pulling and/or twisting the flexible clamp until it disengages the actuator. Once disengagement is achieved the actuator operating device is loose and can, if desired, be retracted from the sewer using the attachment member and be used for another double valve device.

The double valve device may have one or more ejector rods mounted to the first elongate hollow member. The ejector rods hit on the interior wall above the intake pipe and/or the outfall pipe when the actuator unlocks. The second elongate hollow member will normally get out of the outfall pipe easily but the first elongate hollow member may need the ejector rods as backstops in facilitating retraction from the intake pipe. Preferably two ejector rods are mounted to the first elongate hollow member between a respective slide member and suspension bracket. Alternatively the bar members may also serve as ejector rods by designing these bar members with sufficient length and position in relation to the elongate hollow members.

The present invention also relates to a method of preventing backflow into a sewer using the double valve device described above.

The method comprises the steps of
- providing the double valve device in a non-actuated condition of the actuator, preferably a toggle mechanism,
- lowering the double valve device into the sewer until a position of use using an attached external lift member and without loosing said attached external lift member during lowering,
- aligning the first elongate hollow member and the second elongate hollow member of the elongate hollow valve body with the intake pipe and the outfall pipe of the flow channel, respectively,
- actuating the actuator from outside the sewer to lock the actuator to secure the first elongate hollow member and the second elongate hollow member in the flow channel, and
- optionally detaching any of the attached external lift member and/or actuator operating device used for lowering the double valve device and for actuating the actuator, respectively, and
- optionally raising the double valve device from the sewer by unlocking the actuator using an already mounted or remounted actuator operating device and hauling in using an external lift member attached to the actuator operating device.

Sensors for measuring parameters, such as water level, flap positions, and floater positions may be included in the double valve device to monitor the actual condition of the double valve device and the actual sewage situation. The sensors may be of the kind that transmit data of the measured parameters to a monitoring system, e.g. a remote monitoring system, to issue early alerts in case of emerging flooding condition and possible malfunction of the double valve device. The alerts may e.g. be send as an SMS or an email to a person at a remote location enabling said person to make prompt precautions to avoid flooding and damages. Data received from the sensors may be stored and processed by appropriate computer programs and systems to issue warnings, make prognoses and statistics of the sewer situations.

The invention will now be explained in further details with references to the accompanying drawing illustrating exemplary features and embodiment, wherein
fig. 1 is a perspective view of an embodiment of the double valve device seen from the first elongate hollow member oblique from above in the non-actuated state,
fig. 2 shows the same seen from the second elongate hollow member,
fig. 2a is a perspective enlarged scale view of a first embodiment of an actuator operating device,
fig. 2b is a perspective enlarged scale view of a second embodiment of an actuator operating device,
fig. 3 is a perspective view of the embodiment of figs. 1 and 2 seen from the first elongate hollow member oblique from above in the actuated state,
fig. 4 shows the same seen from the second elongate hollow member,
fig. 5 is an exploded perspective view of the main components of the embodiment of the double valve device seen in figs. 1 -4,
fig. 6 is a sectional view of the double valve device in various installation steps, and is seen inside a longitudinal section of the sewer,
fig. 7 is a sectional view of the double valve device in various installation steps, and is seen inside a longitudinal section of the sewer, in a view opposite the view of fig. 6,
fig. 8 is a perspective enlarged scale view of the linkage members of the toggle mechanism in non-actuated state,
fig. 9 is a perspective enlarged scale view of the linkage members of the toggle mechanism in actuated state,
fig. 10 is a perspective enlarged scale view of the first flap valve and the second flap valve and the respective associated articulations,
fig. 11 illustrates the mutual arrangement of the articulations with the flap valves,
fig. 12 is a principle sketch of the double valve device in the state where backflow is prevented by the flap valves of the double valve device, and both flap valves are closed,
fig. 13 is a principle sketch of the double valve device in the state where water level begins to rise in the sewer, and
fig. 14 is a principle sketch of the double valve device in the idle state.

Typical sewers have diameters in the interval from 300 - 1000 mm and lengths of 1 - 7 m. For narrow, deep sewers it is almost impossible to reach the intake pipe and outfall pipe from the ground surface, which make it very difficult to arrange a valve inside these pipes. The bottom of the sewer is almost inaccessible to a man. The present invention proposes a new solution to these problems.

Below the double valve device of the invention is shown and described with an actuator in form of a toggle mechanism that is able to expand/extend the length of the hollow body lengthwise, and lock this double valve device in the expanded/extended position. Other actuators are foreseen within the scope of the present invention provided that they are able to increase the distance between the first elongate hollow member and the second elongate hollow member and keep these members spread apart by also providing a locking function of the kind that prevents the actuator from auto-retracting to it's collapsed condition once it has been expanded/extended.

Because the sewer often is so narrow and deep a man cannot enter the manhole and install the conventional valve devices. The present invention can however advantageously be installed in a standard sewer of a diameter of e.g. 315 mm or 425 mm and having a length of e.g. 1 - 2 m without the need to enter deep down into the sewer.

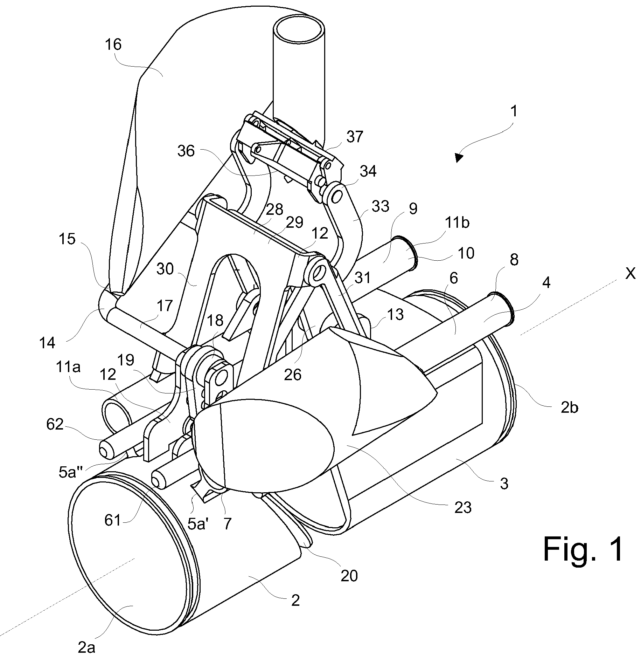

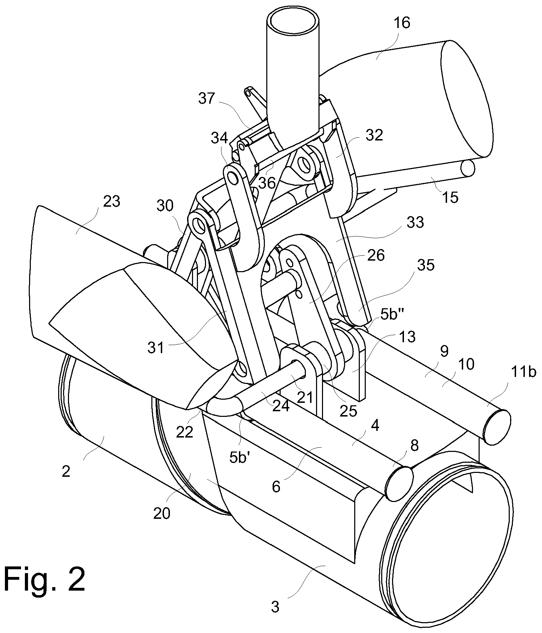

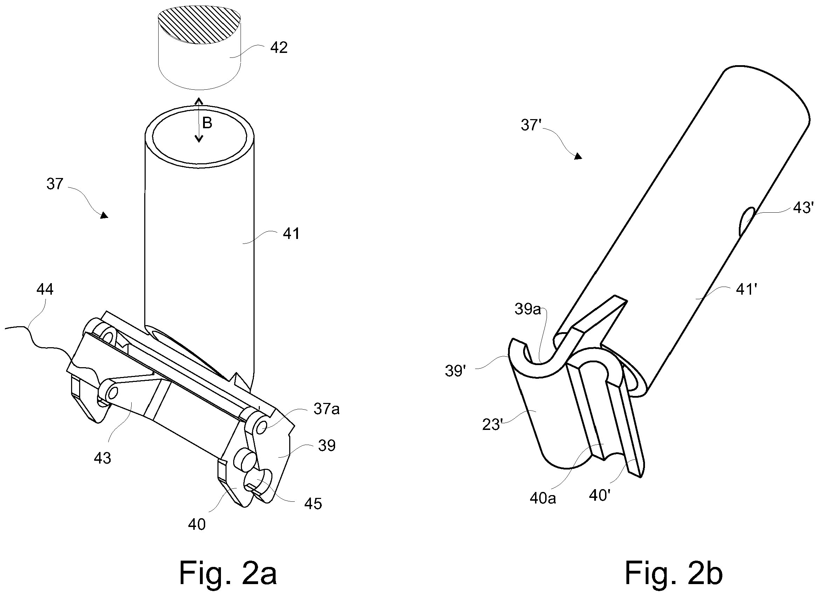

Figs. 1 and 2 are perspective views of an embodiment of a double valve device 1 in non-actuated condition and seen from opposite ends and from the floaters.

The double valve device 1 has a first elongate hollow member 2 slidably arranged in relation to a second elongate hollow member 3 by means of a first slide member 4. Together the aligned first elongate hollow member 2 and second elongate hollow member 3 constitute an elongated hollow valve body 2,3 having a longitudinal axis X extending through respective first and second channels 2a,2b.

The first slide member 4 has a first coupling pipe 5a' secured to the first elongate hollow member 2, a second coupling pipe 5b' secured to the second elongate hollow member 3 and a first bar member in form of a first bar 6. The first bar 6 has a first coupling end 7 located through/or fastened to the first coupling pipe 5a' of the first elongate hollow member 2 and an opposite first free end 8. The first bar 6 is arranged substantial parallel to the longitudinal axis X. The length of the first bar 6 is arranged to slide inside at least one of the first coupling pipe 5a' and second coupling pipe 5b' thereby making it possible to adjust the axial distance between the first elongate hollow member 2 and the second elongate hollow member 3 in accordance with the internal diameter of a sewer wherein the double valve device 1 is to be lowered to be installed, as will be seen and discussed later in relation to the further figures. Alternatively e.g. the first coupling end is secured to the first elongate hollow member either directly or via another component, such as the first coupling pipe.

In the present embodiment shown in figs. 1 and 2 the double valve device 1 has a second slide member 9 arranged symmetrically to the first slide member 4 on the first elongate hollow member 2 and the second elongate hollow member 3 at a distance from said first slide member 4. The first slide member 4 and the second slide member 9 are thus parallel to each other in a plane offset the longitudinal axis. The second slide member 9 provides additional structural integrity to the double valve device 1 so that the first elongate hollow member 2 and the second elongate hollow member 3 do not misalign along the common longitudinal axis X when moved and operated during installation, maintenance, removing and replacing of the double valve device.

The structure and function of the second slide member 9 are similar to the structure and function of the first slide member 4.

Accordingly, the second slide member 9 has it's own first coupling pipe 5a" secured to the first elongate hollow member 2, its own second coupling pipe 5b" secured to the second elongate hollow member 3, and a second bar member in form of a second bar 10. The second bar 10 has a first coupling end 11a located through or secured to the associated first coupling pipe 5a" of the first elongate hollow member 2 and an opposite first free end 11b and is arranged substantial parallel with the longitudinal axis X. The length of the second bar 10 corresponds substantially to the length of the first bar 6 and is arranged to slide through and inside at least one of the first coupling pipe 5a" and the second coupling pipe 5b" in a manner similar to the arrangement of the first bar 6 in relation to it's associated first coupling pipe 5a' and second coupling pipe 5b'.
Between the first bar 6 and the second bar 10 is provided a first suspension bracket 12 on the first elongate hollow member 2 and a second suspension bracket 13 on the second elongate hollow member 3, so when said first elongate hollow member 2 and said second elongate hollow member 3 are moved along the first bar 6 and the second bar 9 said suspension brackets 12,13 move along.

The double valve device 1 has a first ejector rod 61 and a second ejector rod 62 mounted to the first elongate hollow member 2. In the present invention the first ejector rod 61 is situated substantial parallel to the first slide member 4 between the first bar 8 and the first suspension bracket 12. The second ejector rod 62 is situated substantial parallel to the second slide member 4 between the second bar 9 and the second suspension bracket 13. The ejector rods 61,62 are located in a plane above intake pipe and outfall pipe, to function as backstops against the interior sewer wall above said intake pipe and outfall pipe to help getting at least the first elongate hollow member 2 free of the intake pipe during unlocking of the actuator. Other kinds of ejector may be used instead of ejector rods. For example the first bar 8 and the second bar 9 may in themselves also de configured to serve as opposite ejector rods. Thus if the ejector rods 61,62 act above the intake pipe the bars 8,9 may act as ejector rods above the outfall pipe.

A first L-shaped pivot arm 14 has a first floater leg 15 carrying a first floater 16. The first floater leg 15 extends into a first axle leg 17, arranged as or being coincident with, a first axle 18 in the first suspension bracket 12, which first axle 18 defines a first floater pivot axis P1. The first axle leg 17 is pivotably journaled to the first suspension bracket 12, which allows the first floater 16 to move up and down by buoyancy when the first axle leg 17 pivots about the first floater pivot axis P1.
A first articulation 19 connects the first axle 18 with a first flap valve 20 for opening and closing the first channel 2a of the first elongate hollow member 2. A movement of the first floater 16 can thus expediently and inherently be transferred to pivot the first flap valve 20 about the first floater pivot axis P1.

A second L-shaped pivot arm 21 has a second floater leg 22 carrying a second floater 23. The second floater leg 22 extends into a second axle leg 24, arranged as or coincident with, a second axle 25 pivotably journaled in the second suspension bracket 13 thereby defining a second floater pivot axis P2. The second axle leg 24 is pivotably mounted to the second suspension bracket 13, which allows the second floater 23 to move up and down by buoyancy.

A second articulation 26 connects the second axle leg 25 with a second flap valve 27 (not visible in figs. 1 and 2) for opening and closing the second channel 3a of the second elongate hollow member 3. A movement of the second floater 23 can thus expediently and inherently be transferred to pivot the second flap valve 27 about the second floater pivot axis P2.

In the state seen in figs. 1 and 2 the second floater 23 is in it's lower position and has brought the second flap valve 27 along to open for flow through the second channel 3a of the second elongate hollow member 2. In contrast the first floater 16 is in it's raised position and has brought the first flap valve 20 along to close the first channel 2a of the first elongate hollow member 2. The articulations 19,26 consist of several interconnected links arranged in a rigid or pivotable zig-zag configuration. A first link is secured, optionally pivotably, to the respective axle 18,25, and the terminal link is secured, optionally pivotally, to the respective flap valve 20,27.

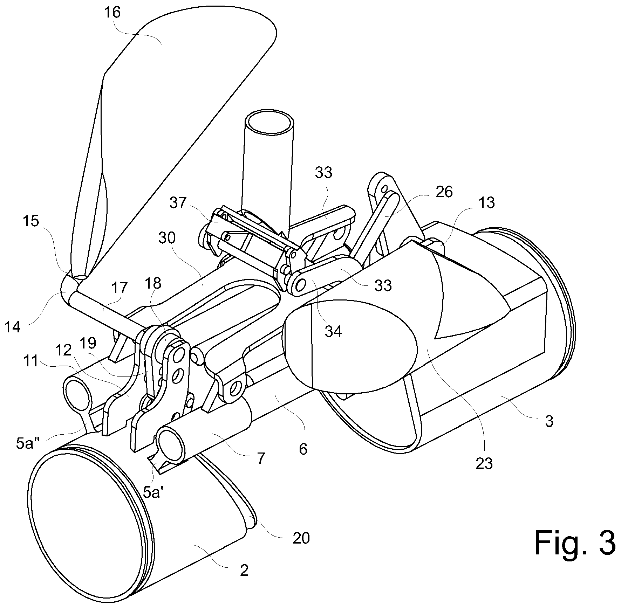

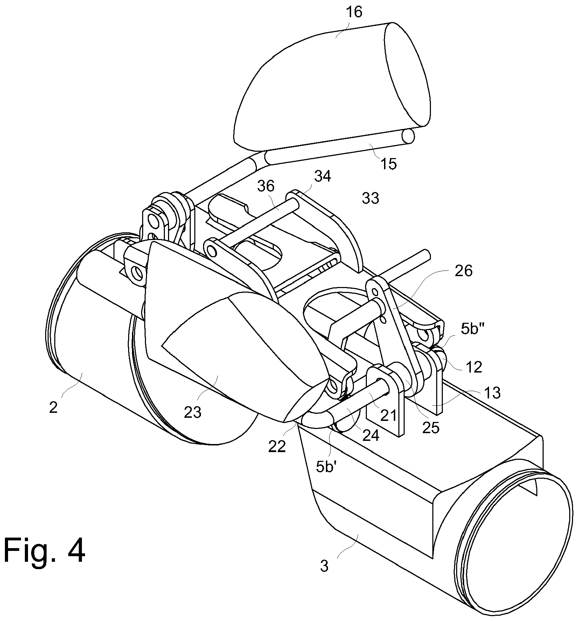

An actuator 28, in form of a toggle mechanism 29, is provided to actuate sliding of the first coupling pipes 5a',5a'' and the second coupling pipes 5b',5b'' on the respective first bar 6 and second bar 10 to move the first elongate hollow member 2 and the second elongate hollow member 3 apart, e.g. into the positions seen in figs. 3 and 4.

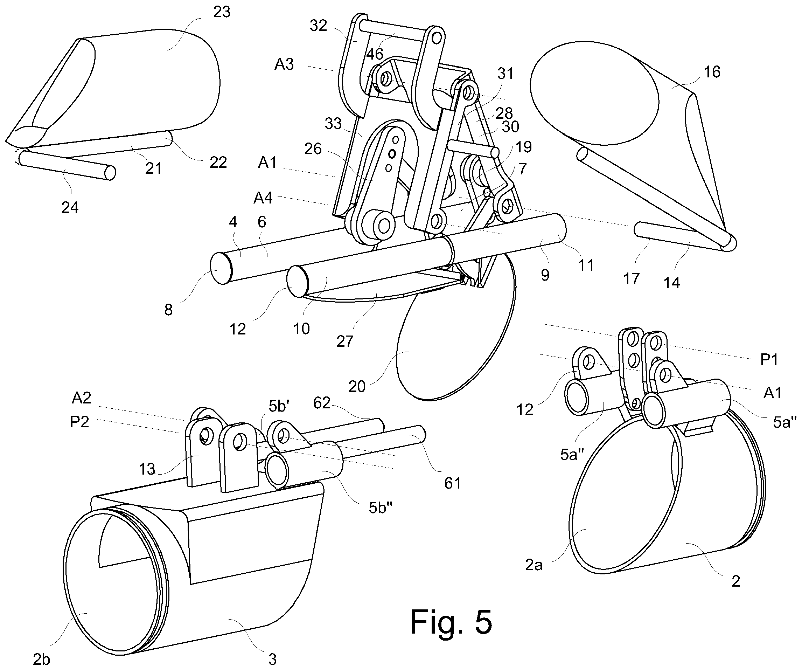

The toggle mechanism 29 of the actuator 28 has a first linkage member 30 pivotable secured to the first coupling pipe 5a' to obtain a first pivot axis A1, a second linkage member 31 pivotable secured to the second coupling pipe 5b" to obtain a second pivot axis A2, and a third linkage member 33 having a free end 34 serving as a handle 32 and an opposite operating end 35 (not visible in figs. 1 and 2), which opposite operating end 35 is connected, optionally pivotally, to the common third pivot axis A3 of the first linkage member 30 and the second linkage member 31, to move the first pivot axis A1 and the second pivot axis A2 along the bars 6,10, thus due to the first linkage member 30 and the second linkage member 31 being pivotable connected to each other at said third pivot axis A3 opposite the respective first coupling pipe 5a' and the second coupling pipe 5a". The third linkage member 33 is curved and extends in elongation of the second linkage member 31 as an extended free end 34 with the handle 32. More linkage members can be provided but as a minimum to achieve the desired spreading effect of the toggle mechanism 29 the first linkage member and the second linkage member are needed. Further, the third linkage member can have it's own axle on the second linkage member to also pivot, but this is not mandatory. All of the linkage members have U-shapes where the legs of the U's are coupled to the suspension bracket and the bottom of the U's of the first linkage member and of the second linkage member are connected to each other to pivot about their commonly defined third pivot axis A3, which bottom of the Us of the linkage members all faces upwards from the sewer, at least prior to activation of the actuator.
The pivot axis A1,A2,A3 and the floater pivot axis P1,P2 can be seen in the exploded view of fig. 5 of the main components of the double valve device 1.

The handle 32 of the third linkage member 33 has an engagement member 36 for engaging an actuator operating device 37. The engagement member 36 can e.g. be one cross rod or two parallel cross rods.

The first embodiment of an actuator operating device 37, which is seen separately in enlarged scale view in fig. 2a, has a flexible clamp mechanism 38 having a first clamp leg 39 hingely connected in spring-biased manner to a second clamp leg 40 on a mutual pivot axle 37a to pivotable and flexible engage and disengage the engagement member 36 of the third linkage member 33. An upright guide tube 41 is secured to the first clamp leg to receive an elongated actuation member 42, shown fragmentary in fig. 2a, to press on, as indicated by double arrow B, the curved third linkage member 33 of the toggle mechanism 29 from outside the sewer (not shown) to spread the first elongate hollow member 2 and the second elongate hollow member 3 apart, and at least partly into the intake pipe and outfall pipe of a flow channel of the sewer. A lift member 43 associated with the second clamp leg 40 includes e.g. a hook or eye for grasping with a tool, to spread the first clamp leg 39 and the second clamp leg 40 in case disengagement from the engagement member 36 of the third linkage member 33 is needed, e.g. to remove the actuator operating device 37 once the double valve device have been securely anchored in the sewer by displacing the first elongated hollow member 2 inside the intake pipe of the sewer and the second elongate hollow member 3 inside the outfall pipe of the sewer.

A second embodiment of an actuator operating device 37' is seen in enlarged scale view in fig. 2b, and used in substantially same way to actuate and lock and unlock the actuator. The second embodiment of an actuator operating device 37' has a flexible clamp mechanism 23' of simpler structure than the first embodiment of the actuator operating device 37. The second embodiment of a flexible clamp mechanism 23' consist in two curved clamp legs, a first curved clamp leg 39' and a second clamp leg 40' that extends in S-shape in elongation of each other and being secured below the upright guide tube 41, when seen down the sewer 47.

When mounted to the third linkage member a first concavity 39a of the first curved clamp leg 39' accommodates one rod of a double rod engagement member (not shown) of said third linkage member so that a pressure force applied to the second embodiment of the actuator operating device 37' by an elongated actuator member inserted into the upright guide tube is transferred to the actuator. A second concavity 40a of the second curved clamp leg 40' faces opposite the first concavity 39a. The second concavity may, if expedient, accommodate a second rod of the double rod engagement member (not shown) of said third linkage member. A traverse hole 43' is part of a lift member and serve to attach a rope 44 to haul in any of the actuator operating device 37' alone or secured to the double valve device or to secure the elongate actuation member releasably to the actuator operating device.

In the perspective view of fig. 3 the double valve device 1 has been fully actuated. The toggle mechanism 29 has been actuated to spread the first elongate hollow member 2 and the second elongate hollow member 3 apart by application of a force on the third linkage member 33 using an elongated actuation member 42 inserted through the upright guide tube 41. Once actuation of the toggle mechanism is completed the toggle mechanism 29 becomes locked in it's depressed "flattened" state with the upright guide tube 41 and associated actuator operating device 37;37' still protruding upwards due to the actuator operating device 37;37' being mounted pivotably to the engagement member 36 of the handle 32 of the third linkage member 33. Then the actuator operating device 37;37' can be removed, as seen in fig. 4, using an attachment string or rope 44 attached to the lift member 43. For the first embodiment of an actuator operating device the lift member 43 and attachment string is used to lift the second clamp leg 40 so that the clamping gap 45 between the first clamp leg 39 and the second clamp leg 40 increases to allow the actuator operating device to get free of the engagement member 36. The first clamp leg 39 and the second clamp 40 are connected via a spring (not shown) so that these legs 39,40 have an in-build closing ability but can be forced to flex apart to open the clamping gap 45. However, the spring urges the legs 39,40 towards each other again after spreading to close the clamping gap 45.

Once the actuator operating device 37;37' is free of it's engagement with the engagement member 36 of the handle 32 of the third linkage member 33 the actuator operating device 37;37' can be lifted up the sewer by hauling in the attachment string or rope.

A protruding rod 46 is arranged on the second linkage member 31 substantially parallel to the first axle leg 17 but at a distance therefrom to keep the first floater 16 lifted when lowered inside the sewer in the non-actuated state of the double valve device 1. Thus the protruding rod 46 follows the movement of the second linkage member 31.

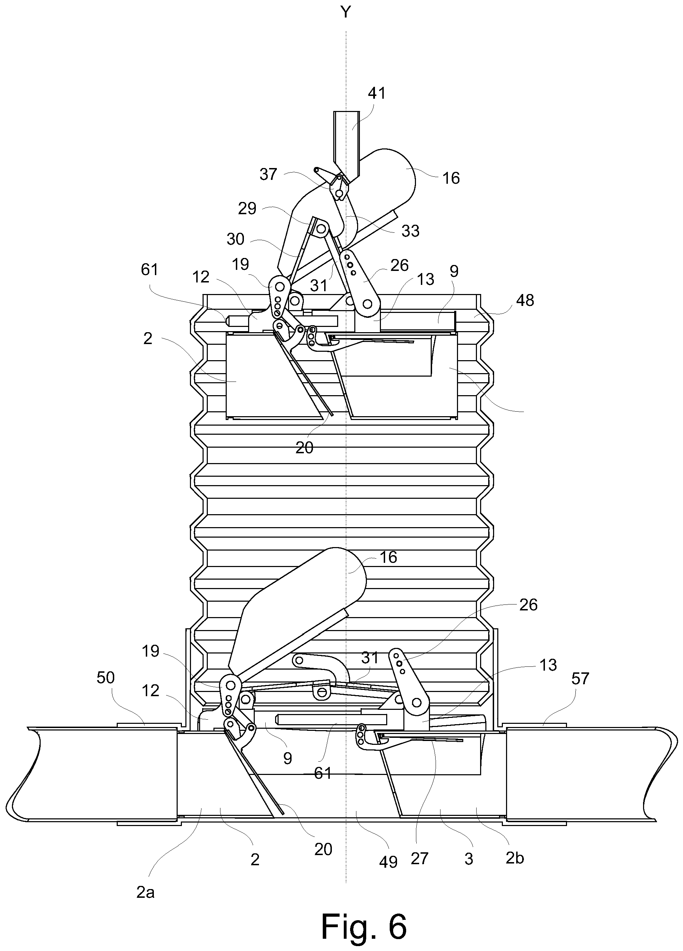

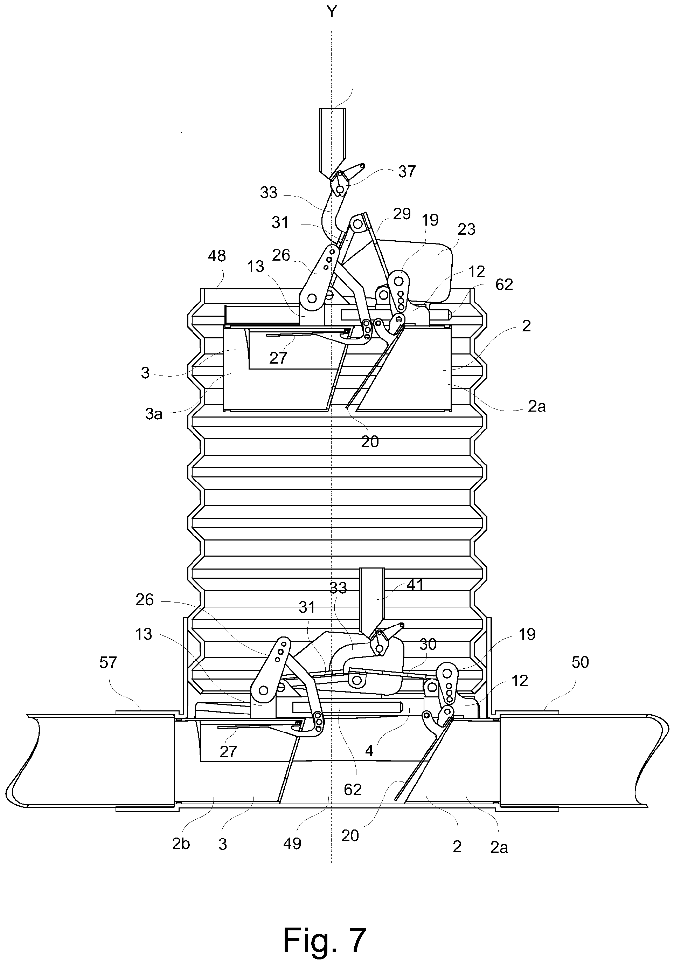

Figs. 6 and 7 are sectional views taken along the longitudinal centre axis Y of a sewer 47 with a double valve device 1 during and after installation. So in figs. 6 and 7 the sewer and the double valve device is cut in two parts along the length of the sewer. Fig. 6 shows the half including the first floater and fig. 7 shows the half including the second floater.

For illustrative purposes no sewage or water content is shown. It should however be understood that in the installed position shown in figs. 6 and 7 water content in the sewer 47 keeps the first floater 16 floating and thereby the first flap valve 20 down to substantially close the first channel 2a. By appropriate configuration of the interconnected links of the first articulation 19 said first articulation obtains a configuration and function so that when the first floater 16 is in it's topmost position the first flap valve 20 closes the first channel 2a of the first elongate hollow member 2, which function even may include to apply a pressure to the first flap valve 20 in the direction opposite the fluid pressure from an outlet source, so as when evacuation of waste water from a domestic source takes place into the intake pipe.

The double valve device 1 is shown in figs. 6 and 7 inside the sewer 47 in a lowering position at the top opening 48 of the sewer 47, and in a fully installed position substantial at the bottom 49 of the sewer 47. Due to the sectional views and the symmetrical structure of the double valve device 1 the second floater 23 and the second bar 10 is not visible in fig. 1, and the first floater 16 and the first bar 6 is not visible in fig. 7.

In the lowering situation/mode the first floater 14 is kept mechanically raised by the protruding rod 46 on the second linkage member 31, and the toggle mechanism 29 is in non-actuated state so that the first elongate hollow member 2 and the second elongate hollow member 3 are the closest to each other, thereby limiting the length of the double valve device 1 to be shorter than the internal diameter of the sewer 47 for unhindered lowering towards the desired depth, e.g. the bottom 49 of the sewer 47, as indicated by arrow C. The actuator operating device 37 is mounted on the handle 32 of the third linkage member 33 with the upright guide tube 41 facing towards the top opening 48 of the sewer 47 to be accessible for and be operatable by an external elongated actuation member 42 via the top opening 48 from outside the sewer 47 when the double valve device 1 has reached it's actuation position. The actuation position is normally in the vicinity of the bottom 49 of the sewer 47, as shown in fig. 6, but could be any position along the length of the sewer 47, i.e. any position wherein the first channel 2a is put in liquid communication with the intake pipe 50 of the sewer 47 by means of the inserted first elongated hollow member 2, and the second channel 3a is put in liquid communication with the outfall pipe 51 of the sewer 47 by means of the second elongated hollow member 3, which liquid communication is obtained upon actuation of the toggle mechanism 29 thereby spreading said first elongate hollow member 2 and said second elongate hollow member 3 apart to engage said intake pipe 50 and outfall pipe 51, respectively, and lock said member in spread apart position by the locked actuator. The protruding rod 46, which protrudes from the second linkage member 31, does not support the first floater 16 once the toggle mechanism is actuated and the first linkage member and the second linkage member are brought into the flattened position by depressing and or pivoting the third linkage member 33.

In the state seen in figs. 6 and 7 the second flap valve 27 is lifted inside the second elongate hollow member 3 because the second floater 23 is not kept buoyant. In this situation water inside the sewer can escape to e.g. a sewage network or reservoir.

Further, in fig. 6 the actuator operating device 37, which is still secured to the third linkage member of the toggle mechanism 29 in fig. 7, has been disconnected from the double valve device 1 after installation at the bottom of the sewer, and has been hauled up.

If the second floater 23 is also buoyant the second flap valve 27 closes the second channel 3a so that outlet of sewage or water through the sewer 47 is no longer possible. Thus water in the sewer 47 can neither flow back to e.g. a house via the intake pipe 50 nor escape or only escape to a limited extent via the outfall pipe 51 if both the first channel 2a and the second channel 3a are more or less closed by respective first and second flap valves 20,27.

The first flap valve 20 pivots to open and close the first valve opening to the first channel 2a at the sloped first end 52 of the first elongate hollow member 2. The sloped first end 52 can e.g. have an angle α of about 30 - 60° in relation to a longitudinal centre axis Y of the sewer 47, preferably about 45°. When the first floater is in it's topmost position the first flap valve 20 may, in it's very lowest position, have a corresponding angle α as the sloped first end in relation to a centre axis Y of the sewer 47, optionally a slightly smaller angle to press tightly on the sloped first end 52. This angular arrangement forces the first flap valve 20 to close the intake pipe 50 when liquid levels are high inside the sewer 47. Only under extraordinary conditions the sewage pressure or water pressure from the house or other source is so high that it is larger than the buoyancy of the first floater 16. So this water pressure will have no or only limited effect in counteracting this buoyancy and thus virtually no impact on the first flap valve 20 that would cause the first flap valve 20 to unintentionally open. When the first floater 16 does not float, because water or sewage level in the sewer 47 is low, the first flap valve 20 pivots inside the sewer, e.g. into a plane substantially parallel to the longitudinal axis X of the elongate hollow valve body 2,3, e.g. into an angle close to 0°.

Emphasis is made that the first flap valve 20 and the second flap valve 27 pivot in the same direction, namely away from the intake pipe 50 in the direction towards the outfall pipe 51. Accordingly, the first flap valve 20 pivots away from the first elongate hollow member 2 and the second flap valve 27 pivots towards and inside the second channel 3a of the second elongate hollow member 3. As already mentioned, in the closed position of the first elongate hollow member 2 the angularly arranged first flap valve 20 is brought in front of the sloped first end 52.

As seen better in fig. 7 the closed second flap valve 27 can also serve to prevent water from a reservoir having high water level to rise into the sewer 47 in response to the second floater 23's buoyancy. Since the second flap valve 27 can pivot inside the second elongate hollow member 3 similar sloping of the sloped second end 53 and of the second flap valve 20 is not needed although some sloping is preferred. E.g. the sloped second end 53 can have a slope of between 10-40° in relation to the longitudinal centre axis Y of the sewer 47, and the second flap valve 27 be angularly pivotable into a plane substantially parallel to longitudinal axis X of the elongate hollow member 2,3, e.g. pivot into an angle close to 0°. So when the second floater 23 does not float the second flap valve 27 turns to open for flow through the outfall pipe 51.

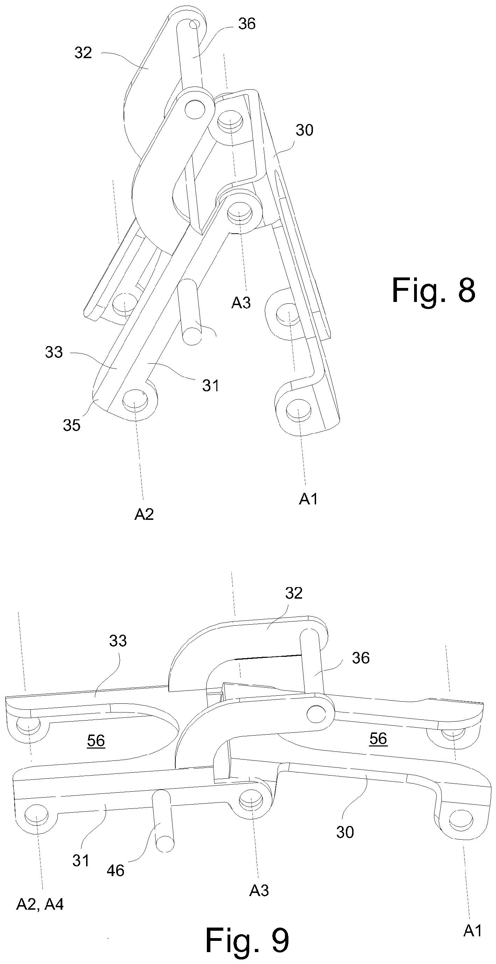

Figs. 8 and 9 are perspective enlarged scale views of the linkage members of the toggle mechanism in non-actuated state and actuated state, respectively.

The first linkage member 30 and the second linkage member 31 are U-shackles pivotably connected to each other at the third pivot axis A3 and to the respective first and second coupling pipes 5a',5a'';5b'5b'' at respective first axis A1 and second pivot axis A2. In this convenient embodiment the third linkage member 33 are joined. e.g. by welding, to the second linkage member 31 so that the handle 32 faces upright in non-actuated state of the toggle mechanism seen in fig. 8, and turns together with the second linkage member 31 when the toggle mechanism is actuated, as seen in fig. 9, to reach a lowered position. In the non-actuated state of the toggle mechanism seen in fig. 8 the angle between the first linkage member and the second linkage member is acute, however this angle depends a.o. on the lengths of the linkage members alone or seen in combination with required the span of the double valve device.

This angle is increased towards about 160 - 180° when locked after installation.

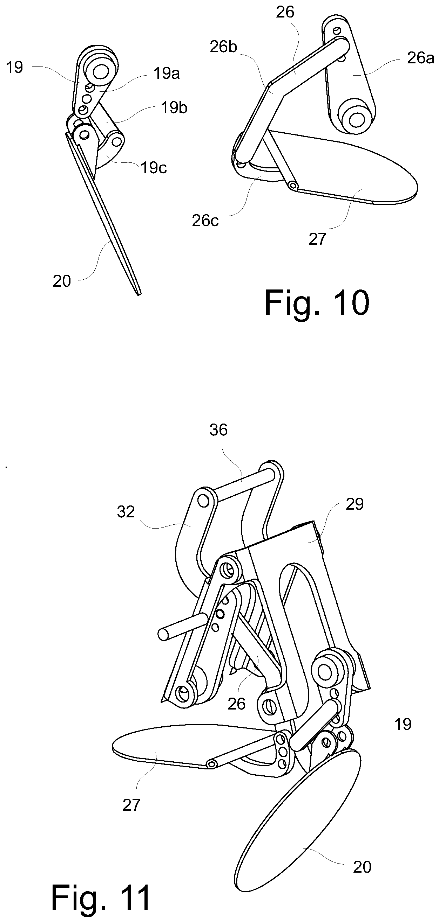

The articulations of the flap valves are seen more clearly in the perspective view of fig. 10.

The first articulation 19 for the first flap valve 20 consists of three interconnected mutually pivotable first valve flap linkages 19a,19b,19c arranged in zig-zag to transfer movement of the first floater 16 into pivoting of the first flap valve 20. A third suspension bracket 54 in the vicinity of the first articulation 19's attachment to the first flap valve 20 serves to mount the first flap valve 20 to the first suspension bracket 12, or any other bracket or pivot means, on the first elongate hollow member 2 in pivotable manner to close and open the first valve opening 55 of the first channel 2a of the first elongate hollow member 2.

The second articulation 26 for the second flap valve 27 consists of three interconnected mutually pivotable second valve flap linkages 26a,26b,26c arranged in zig-zag to transfer movement of the second floater 23 into pivoting of the second flap valve 27. A first second valve flap linkages 26a is mounted pivotably in the second suspension bracket 13, or at other similar position, and extends via a second second valve flap linkages 26b into the third second valve flap linkages 26c which is secured to the second flap valve 27. So the second articulation is configured to pivot the second flap valve 27 to more or less close and open the second valve opening 57 of the second channel 3a of the second elongate hollow member 3.

Fig. 11 illustrates the mutual arrangement of the articulations 19,20 with the flap valves 20,27. The articulations 19,20 are operatively interposed in the gap 56 between the opposite legs of the shackle-formed linkage members 30,31,33 of the toggle mechanism 29. In this position the articulations 19,20 can move freely without the toggle mechanism 29 being in the way. The gap 56 also allows the toggle mechanism 29 to be actuated without hitting the articulations 19,20.

Instead of that the flap valve linkages are mutually pivotally the linkages may be rigidly connected to keep a certain well-defined angle adapted and selected to fully close the flap valves when the floater are in top position in the sewer.

The articulations can be any means that allows pivoting of the flap valves, including but not limited to a gearing means.

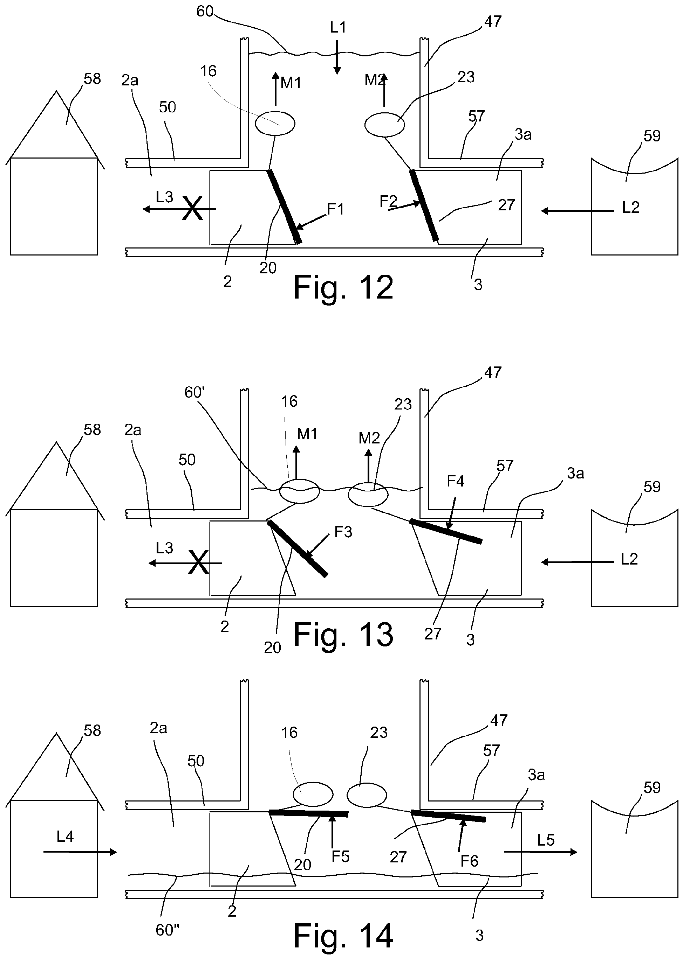

Figs. 12, 13 and 14 illustrate various situations and possible positions of floaters and flap valves in response to different water loads from the house or the surroundings.

In particular fig. 12 is a principle sketch of the double valve device 1 in the state where backflow to a house 58 is prevented by both the closed flap valves 20,27. As indicated by arrow L1 water from e.g. cloudburst, torrential rain, heavy shower, melt water or flooding has entered the sewer 47 from above. As indicated by arrow L2 the sewer network 59 is under substantial load as well under these conditions, and water, such as blackwater or greywater, from the sewer network 59 attempts to flow back inside the sewer 47. The water level 60 is now high in the sewer 47 which has caused both buoyant floaters 16,23 to raise and close both respective flap valves 20,27, as indicated by force arrows F1 and F2. Thus in this high-load critical situation, e.g. as in storm surge, both floaters 16,23 are in top position, which even can be below the water level 60 in the sewer 47. As indicated by cross-over arrow L3, owing to the buoyancy of the floaters, as indicated by arrow M1 and M2, the flap valves 20,27 effectively closes the openings 55,57 of the channel 2a,3a of the elongate hollow valve body 2,3, and prevent backflow to the house 58.

In the situation seen in fig. 13 the water level 60' has sunk compared to the situation in fig. 12. No water enters the sewer 47 from above, however dammed-up or impounded water is still inside the sewer 47. Both floaters 16,23 have moved closer to the bottom of the sewer 47 albeit both are still floating, as indicated by arrows M1,M2, at the still high water level 60'. Since there is still some backflow from the sewer network 59 into the sewer 47, as indicated by arrow L2, both flap valves 20,27 are about to more or less close the respective channels 2a,3a, as indicated by force arrows F3,F4.

In fig. 14 the double valve device is in the idle state. The intake pipe 50 that communicates with the discharge from the house 58, and the outfall pipe 57 from the sewer 47 that communicates with the sewer network 59, are both open so that discharge of wastewater from the house 58 to the sewer network can proceed unhindered. The water level 60" is low, and both floaters 16,23 are in bottom position and not floating, which has forced the flap valves 20,27 away from the respective openings 55,57, as indicated by force arrows F5,F6, thereby keeping said openings 55,57 free for water to escape from house 58 into sewer network 59.

To summarise the double valve device 1 of the present invention is a backflow prevention valve to be inserted into a sewer installation. Simple installation is facilitated by lowering the double valve device in the sewer in a compacted state and expanding the double valve device 1 by altering the distance between the first elongate hollow member 2 and the second elongate hollow member 3 simply by operating an actuator such as the toggle mechanism 29. The angle position of the flap valves 20,27 depends of the position of the floaters 16,23, the buoyancy of which pivots the flap valves 20,27 to open and close the channels 2a,2b due to the articulations 19,26 that rigidly or pivotally connect the floaters 16,23 to the flap valves 20,27, thus in a well-defined manner so that the vertical movement of the floaters is converted into a pivoting, turning or rotation of the flap valves which displace in relation to the elongate hollow members to which they are associated.

The improved valve device of the present invention serves as an efficient closure to prevents sewer backflow in extreme conditions, by providing a fluid-actuated device and system for controlling the opening and closing of the valve device relative to the sewer water line.

Backwash of previously discharged contaminated water, such as greywater and/or blackwater, to a building can expediently be prevented by the self-controlling device and method of the present invention.

The double valve device of the present invention is a backwater anti-flood valve designed for use in accordance with EN13564 and DS432 standards for wastewater either with or without faecal matter.

The valve device may have one, but preferably two, independent closures in form of flap valves. Thus the valve device of the present invention is a backflow blocker, which, during daily operation, allows wastewater to pass by, but in damming and flooding situations automatically closes the flap valves in the drainage line so that water cannot flow into the drain upstream the valve device.

## Claims

1. A double valve device (1) for mounting in a flow channel of a sewer (47) for the prevention of backflow, the sewer (47) has an intake pipe (50) and an outfall pipe (51) for sewage and/or water, the double valve device (1) comprises an elongated hollow valve body (2,3) and an actuator (28) wherein
- the elongated hollow valve body (2,3) includes a first elongate hollow member (2) defining a first channel (2a) and a second elongate hollow member (3) defining a second channel (3a) opposite the first channel (2a),
- the first elongate hollow member (2) has a first flap valve (20) pivotally movable between a closed state and an open state of a first valve opening (55) of the first elongate hollow member (2), and
- the second elongate hollow member (3) has a second flap valve (27) pivotally movable between a closed state and an open state of a second valve opening (57) of the second elongate hollow member (3), which second valve opening (57) faces the first valve opening (55)
- **characterised in that**
- the actuator (28) is operatively connected to the elongate hollow valve body (2,3) to allow adjusting the distance between the first elongated hollow member (2) and the second elongate hollow member (3) upon actuation.

2. A double valve device (1) according to claim 1, **characterised in that** the actuator (28) comprises one or more of a toggle mechanism (29), a spindle, an electric motor, a spring mechanism, a pneumatic motor or a hydraulic motor.

3. A double valve device (1) according to claims 1 or 2, **characterised in that** the actuator (28) is operatively connected to the elongate hollow valve body (2,3) by means of a slide member (4,9), wherein the slide member (4,9) has
- a bar member (6,10)
- a first coupling member (5a',5a") associated with the first elongate hollow member (2), and
- a second coupling member (5b',5b") associated with the second elongate hollow member (3), and wherein
- at least one of the first coupling member (5a',5a") and the second coupling member (5b',5b") are slidable mounted to the bar member (6,10).

4. A double valve device (1) according to any of claims 2 or 3, **characterised in that** the toggle mechanism (29) of the actuator (28) has
- a first linkage member (30) pivotable secured to the first coupling member (5a',5a") at a first pivot axis (A1),
- a second linkage member (31) pivotable secured to the second coupling member (5b',5b") at a second pivot axis (A2),
- the first linkage member (30) and the second linkage member (31) are pivotable connected to each other at a third pivot axis (A3) opposite the respective first coupling member (5a',5a") and the second coupling member (5b',5b"), and
- a third linkage member (33) having a free end (34) and an opposite operating end (35), which opposite operating end (35) is connected to at least one of the first linkage member (30) or the second linkage member (31), optionally connected at the third pivot axis (A3), to move the first pivot axis (A1) and the second pivot axis (A2) apart along the bar member (4,9).

5. A double valve device according to claims 3 or 4, **characterised in that**
- the first coupling member (5a',5a") is at least one first pipe or ring,
- optionally the second coupling member (5b',5b") is at least one second pipe or ring,
- the bar member (4,9) is at least one bar (4,9) that extends through said at least one first pipe or ring to allow sliding of the first coupling members (5a',5a") on the bar member (4,9) to move the first elongate hollow member (2) and the second elongate hollow member (3) to and fro each other by operating the actuator (29),
- optionally the bar member (6,9) is fixed to the first elongate hollow member (2) directly or via the first coupling member (5a',5a").

6. A double valve device (1) according to any of the preceding claims 1 - 5, **characterised in that**
- the first elongate hollow member (2) has a first floater (16) operatively connected to the first flap valve (20) to open and close the first channel (2a) in response to changes in liquid flow or liquid level in at least one of the flow channel (50,51), or the sewer (47), and
- the second elongate hollow member (3) has a second floater (23) operatively connected to the second flap valve (27) to open and close the second channel (3a) in response to changes in liquid flow or liquid level in at least one of the flow channel (50,51), or the sewer (47).

7. A double valve device (1) according to any of the preceding claims 1 - 6, **characterised in that**
- the first elongate hollow member (2) has a sloped first end (52) at the first valve opening (55),
- optionally the second elongate hollow member (3) has a sloped second end (53) at the second valve opening (57).

8. A double valve device (1) according to claims 6 - 7, **characterised in that** the first elongate hollow member (2) has a first suspension bracket (12) operatively connected to a first pivot arm (14) provided on the first floater (16), which first pivot arm (14) is operatively connected to the first flap valve (20), optionally via a first articulation (19), and the second elongate hollow member (3) has a second suspension bracket (13) operatively connected to a second pivot arm (21) provided on the second floater (23), which second pivot arm (21) is operatively connected to the second flap valve (27), optionally via a second articulation (26).

9. A double valve device (1) according to any of the preceding claim 3 - 8, **characterised in that** the slide member (4,9) comprises
- at least two bar members (6,10) having substantially parallel bar axis, and
- at least a second coupling member (5b',5b") for each bar member (6,10), and optionally at least a first coupling member (5a',5a") for each bar member (6,10).

10. A double valve device (1) according to any of the preceding claims 1 - 9, **characterised in that** the actuator has a protruding rod (46) for keeping a floater (16) raised during lowering of the double valve device (1) into the sewer (47).

11. A double valve device (1) according to any of the preceding claims 6 - 10, **characterised in that** when a floater (16,23) is in it's lowered position the associated flap valve (20,27) is in an open state of a respective valve opening (55,57) of the respective elongate hollow member (2,3), and when a floater (16,23) is in it's raised position the associated flap valve (20,27) is in a closed state of a respective valve opening (55,57) of the respective elongate hollow member (2,3).

12. A double valve device (1) according to any of the preceding claims 1 - 11, **characterised in that** the double valve device (1) comprises an actuator operating device (37;37').

13. A double valve device (1) according to any of the preceding claims 4 - 12, **characterised in that** the free end (34) of the third linkage member (33) has an engagement member (36) for engaging an actuator operating device (37;37'), the actuator operating device (37;37') comprises
- a flexible clamp mechanism (38;38') adapted to attach to the third linkage member (33),
- an upright guide tube (41;41') to receive an elongated actuation member (42) to depress the third linkage member (33) of the actuator from outside the sewer (27), to spread the first elongate hollow member (2) and the second elongate hollow member (3) apart and at least partly into the intake pipe and the outfall pipe of the flow channel (50,51) of the sewer (47), and
- a lift member (43).

14. A double valve device (1) according to claim 13, **characterised in that**
- the flexible clamp mechanism (38) has a first clamp leg (39) hingely connected to a second clamp leg (40) to pivotably engage and disengage the engagement member (46) of the third linkage member (33), and optionally the lift member (43) includes a hook or eye, adapted to cooperate with an external lift member (44) to spread the first clamp leg (39) and the second clamp leg (40) to disengage the engagement member (46) of the third linkage member (33), or
- the flexible clamp mechanism (38') has a first curved clamp leg (39') extending in a S-shape into a second curved clamp leg (40') to resiliently snap to engage and disengage the engagement member (46) of the third linkage member (33), and optionally the lift member (43') includes a hole (43') through the upright pipe (41') for securing an external lift member (44).

15. A method of preventing backflow into a sewer (47) using the double valve device (1) according to any of the preceding claims 1 - 14, which method comprises the steps of
- providing the double valve device (1) in a non-actuated condition of the actuator (29),
- lowering the double valve device (1) into the sewer (47) until a position of use using an attached external lift member (44) and without loosing said attached external lift member (44) during lowering,
- aligning the first elongate hollow member (2) and the second elongate hollow member (3) of the elongate hollow valve body (2,3) with the intake pipe and the outfall pipe of the flow channel (50,51),
- actuating the actuator (29) from outside the sewer (47) to lock the actuator to secure the first elongate hollow member (2) and the second elongate hollow member (3) in the flow channel (51,51), and
- optionally detaching any of the attached external lift member (44) and/or actuator operating device (37:37') used for lowering the double valve device (1) and for actuating the actuator, and
- optionally raising the double valve device from the sewer by unlocking the actuator using an already mounted or remounted actuator operating device and hauling in using an external lift member attached to the actuator operating device.

## Patentansprüche

1. Eine Doppelventilvorrichtung (1) zur Montage in einem Strömungskanal einer Abwasserleitung (47) zur Verhinderung des Rückflusses, wobei die Abwasserleitung (47) ein Einlassrohr (50) und ein Abflussrohr (51) für Abwasser und/oder Wasser hat, die Doppelventilvorrichtung (1) einen langgestreckten hohlen Ventilkörper (2,3) und einen Aktor (28) umfasst, wobei
- der langgestreckte hohle Ventilkörper (2,3) ein erstes langgestrecktes hohles Element (2) umfasst, das einen ersten Kanal (2a) definiert und ein zweites langgestrecktes hohles Element (3) umfasst, das einen gegenüber dem ersten Kanal (2a) angeordneten zweiten Kanal (3a) definiert,
- das erste langgestreckte hohle Element (2) ein erstes Klappenventil (20) hat, das zwischen einem geschlossenen Zustand und einem geöffneten Zustand einer ersten Ventilöffnung (55) des ersten langgestreckten hohlen Elements (2) drehbar bewogen werden kann, und
- das zweite langgestreckte hohle Element (3) ein zweites Klappenventil (27) hat, das zwischen einem geschlossenen Zustand und einem geöffneten Zustand einer zweiten Ventilöffnung (57) des zweiten langgestreckten hohlen Elements (3) drehbar bewogen werden kann, wobei die zweite Ventilöffnung (57) der ersten Ventilöffnung (55) zugewandt ist,
- **dadurch gekennzeichnet, dass**
- der Aktor (28) betriebsfähig mit dem langgestreckten hohlen Ventilkörper (2,3) verbunden ist, um bei der Betätigung die Einstellung des Abstands zwischen dem ersten langgestreckten hohlen Element (2) und dem zweiten langgestreckten hohlen Element (3) zu ermöglichen.

2. Eine Doppelventilvorrichtung (1) nach Anspruch 1, **dadurch gekennzeichnet, dass** der Aktor (28) einen oder mehrere Kniehebelmechanismen (29), eine Spindel, einen elektrischen Motor, einen Federmechanismus, einen pneumatischen Motor oder einen hydraulischen Motor umfasst.

3. Eine Doppelventilvorrichtung (1) nach den Ansprüchen 1 oder 2, **dadurch gekennzeichnet, dass** der Aktor (28) mit dem langgestreckten hohlen Ventilkörper (2,3) mittels eines Schiebeteils (4,9) betriebsfähig verbunden ist, wobei das Schiebeteil (4,9) folgendes hat
- ein Stangenteil (6,10)
- ein erstes Kupplungselement (5a',5a"), das mit dem ersten langgestreckten hohlen Element (2) verknüpft ist, und
- ein zweites Kupplungselement (5b',5b"), das mit dem zweiten langgestreckten hohlen Element (3) verknüpft ist, und wobei
- mindestens eines von dem ersten Kupplungselement (5a',5a") und dem zweiten Kupplungselement (5b',5b") am Stangenteil (6,10) verschiebbar montiert sind.

4. Eine Doppelventilvorrichtung (1) nach einem der Ansprüche 2 oder 3, **dadurch gekennzeichnet, dass** der Kniehebelmechanismus (29) des Aktors (28) folgendes hat
- ein erstes Verbindungselement (30), das am ersten Kupplungselement (5a',5a") an einer ersten Drehachse (A1) drehbar fixiert ist,
- ein zweites Verbindungselement (31), das am zweiten Kupplungselement (5b',5b") an einer zweiten Drehachse (A2) drehbar fixiert ist,
- wobei das erste Verbindungselement (30) und das zweite Verbindungselement (31) miteinander an einer dritten Drehachse (A3) gegenüber dem jeweiligen ersten Kupplungselement (5a',5a") und dem zweiten Kupplungselement (5b',5b") verbunden sind, und
- ein drittes Verbindungselement (33), das ein freies Ende (34) und ein gegenüber angeordnetes Betriebsende (35) hat, welches gegenüber angeordnete Betriebsende (35) mit mindestens einem von dem ersten Verbindungselement (30) oder dem zweiten Verbindungselement (31) verbunden, wahlweise an der dritten Drehachse (A3) angeschlossen, ist, um die erste Drehachse (A1) und die zweite Drehachse (A2) auseinander entlang des Stangenteils (4,9) zu bewegen.

5. Eine Doppelventilvorrichtung nach den Ansprüchen 3 oder 4, **dadurch gekennzeichnet, dass**
- das erste Kupplungselement (5a',5a") mindestens ein erstes Rohr oder ein erster Ring ist,
- wahlweise das zweite Kupplungselement (5b',5b") mindestens ein zweites Rohr oder ein zweiter Ring ist,
- das Stangenteil (4,9) mindestens eine Stange (4,9) ist, die sich durch das mindestens eine erste Rohr oder den mindestens einen ersten Ring erstreckt, um das Schieben der ersten Kupplungselemente (5a',5a") auf dem Stangenteil (4,9) zu ermöglichen, um das erste langgestreckte hohle Element (2) und das zweite langgestreckte hohle Element (3) hin und her bezüglich einander durch den Betrieb des Aktors (29) zu bewegen,
- wahlweise das Stangenteil (6,9) am ersten langgestreckten hohlen Element (2) unmittelbar oder durch das erste Kupplungselement (5a',5a") befestigt ist.

6. Eine Doppelventilvorrichtung (1) nach einem der vorhergehenden Ansprüche 1 - 5, **dadurch gekennzeichnet, dass**
- das erste langgestreckte hohle Element (2) einen ersten Schwimmer (16) hat, der betriebsfähig mit dem ersten Klappenventil (20) verbunden ist, um den ersten Kanal (2a) als Antwort auf Änderungen in der Flüssigkeitsströmung oder im Flüssigkeitspegel in mindestens einem von dem Strömungskanal (50,51) oder der Abwasserleitung (47) zu öffnen oder zu schließen, und
- das zweite langgestreckte hohle Element (3) einen zweiten Schwimmer (23) hat, der betriebsfähig mit dem zweiten Klappenventil (27) verbunden ist, um den zweiten Kanal (3a) als Antwort auf Änderungen in der Flüssigkeitsströmung oder im Flüssigkeitspegel in mindestens einem von dem Strömungskanal (50,51) oder der Abwasserleitung (47) zu öffnen oder zu schließen.

7. Eine Doppelventilvorrichtung (1) nach einem der vorhergehenden Ansprüche 1 - 6, **dadurch gekennzeichnet, dass**
- das erste langgestreckte hohle Element (2) ein geneigtes erstes Ende (52) an der ersten Ventilöffnung (55) hat,
- wahlweise das zweite langgestreckte hohle Element (3) ein geneigtes zweites Ende (53) an der zweiten Ventilöffnung (57) hat.

8. Eine Doppelventilvorrichtung (1) nach den Ansprüchen 6 - 7, **dadurch gekennzeichnet, dass** das erste langgestreckte hohle Element (2) einen ersten Federbock (12) hat, der mit einem auf dem ersten Schwimmer (16) bereitgestellten ersten Schwenkarm (14) betriebsfähig verbunden ist, welcher erste Schwenkarm (14) betriebsfähig mit dem ersten Klappenventil (20), wahlweise durch ein erstes Gelenk (19), verbunden ist, und das zweite langgestreckte hohle Element (3) einen zweiten Federbock (13) hat, der mit einem auf dem zweiten Schwimmer (23) bereitgestellten zweiten Schwenkarm (21) betriebsfähig verbunden ist, welcher zweite Schwenkarm (21) mit dem zweiten Klappenventil (27), wahlweise durch ein zweites Gelenk (26), betriebsfähig verbunden ist.

9. Eine Doppelventilvorrichtung (1) nach einem der vorhergehenden Ansprüche 3 - 8, **dadurch gekennzeichnet, dass** das Schiebeteil (4,9) folgendes umfasst
- mindestens zwei Stangenteile (6, 10), die im Wesentlichen parallele Stangenachsen haben, und
- mindestens ein zweites Kupplungselement (5b',5b") für jedes Stangenelement (6, 10), und wahlweise mindestens ein erstes Kupplungselement (5a',5a") für jedes Stangenteil (6,10).

10. Eine Doppelventilvorrichtung (1) nach einem der vorhergehenden Ansprüche 1 - 9, **dadurch gekennzeichnet, dass** der Aktor einen herausragenden Stab (46) hat, um einen Schwimmer (16) während des Absenkens der Doppelventilvorrichtung (1) in die Abwasserleitung (47) hinein angehoben zu halten.

11. Eine Doppelventilvorrichtung (1) nach einem der vorhergehenden Ansprüche 6 - 10, **dadurch gekennzeichnet, dass**, wenn ein Schwimmer (16,23) in seiner abgesenkten Position ist, das verknüpfte Klappenventil (20,27) in einem geöffneten Zustand von einer jeweiligen Ventilöffnung (55, 57) des jeweiligen langgestreckten hohlen Elements (2,3) ist und, wenn ein Schwimmer (16, 23) in seiner abgehobenen Position ist, das verknüpfte Klappenventil (20, 27) in einem geschlossenen Zustand von einer jeweiligen Ventilöffnung (55, 57) des jeweiligen langgestreckten hohlen Elements (2,3) ist.

12. Eine Doppelventilvorrichtung (1) nach einem der vorhergehenden Ansprüche 1 - 11, **dadurch gekennzeichnet, dass** die Doppelventilvorrichtung (1) eine Vorrichtung (37; 37') zum Betrieb des Aktors umfasst.

13. Eine Doppelventilvorrichtung (1) nach einem der vorhergehenden Ansprüche 4 - 12, **dadurch gekennzeichnet, dass** das freie Ende (34) des dritten Verbindungselements (33) ein Einklinkelement (36) zum Einklinken von einer Vorrichtung (37; 37') zum Betrieb des Aktors umfasst, wobei die Vorrichtung (37; 37') zum Betrieb des Aktors folgendes umfasst
- einen flexiblen Klemmmechanismus (38; 38'), der angepasst ist, um am dritten Verbindungselement (33) befestigt zu werden,
- ein stehendes Führungsrohr (41; 41') zur Aufnahme von einem langgestreckten Betätigungselement (42) zum Absenken des dritten Verbindungselements (33) des Aktors von außerhalb der Abwasserleitung (27), um das erste langgestreckte hohle Element (2) und das zweite langgestreckte hohle Element (3) auseinander und teilweise in das Einlassrohr und das Abflussrohr des Strömungskanals (50, 51) der Abwasserleitung (47) zu strecken, und
- ein Aufzugsteil (43).

14. Eine Doppelventilvorrichtung (1) nach Anspruch 13, **dadurch gekennzeichnet, dass**
- der flexible Klemmmechanismus (38) einen ersten Klemmschenkel (39) hat, der gelenkig mit einem zweiten Klemmschenkel (40) verbunden ist, um das Einklinkelement (46) des dritten Verbindungselements (33) drehbar ein- und auszuklinken, und das Aufzugsteil (43) wahlweise einen Haken oder eine Öse umfasst, das bzw. die angepasst ist, um mit einem äußeren Aufzugsteil (44) zusammen zu wirken, um den ersten Klemmschenkel (39) und den zweiten Klemmschenkel (40) zu strecken, um das Einklinkelement (46) vom dritten Verbindungselement (33) auszuklinken, oder
- der flexible Klemmmechanismus (38') einen ersten gekrümmten Klemmschenkel (39') hat, der sich mit einer S-Form in einen zweiten gekrümmten Klemmschenkel (40') hinein erstreckt, um resilierend einzurasten, um das Einklinkelement (46) vom dritten Verbindungelement (33) ein- und auszuklinken, und das Aufzugsteil (43') wahlweise eine Öffnung (43') durch das stehende Rohr (41') zur Befestigung von einem äußeren Aufzugsteil (44) umfasst.

15. Ein Verfahren zur Verhinderung des Rückflusses in eine Abwasserleitung (47) durch den Einsatz von der Doppelventilvorrichtung (1) nach einem der vorhergehenden Ansprüche 1 - 14, welches Verfahren folgende Schritte umfasst:
- bereitstellen der Doppelventilvorrichtung (1) in einem nicht betätigten Zustand des Aktors (29),
- absenken der Doppelventilvorrichtung (1) in die Abwasserleitung (47) bis zu einer Betriebsposition durch den Einsatz von einem angeschlossenen äußeren Aufzugsteil (44) und ohne das angeschlossene äußere Aufzugsteil (44) während des Absenkens zu lösen,
- ausrichten des ersten langgestreckten hohlen Elements (2) und des zweiten langgestreckten hohlen Elements (3) des langgestreckten hohlen Ventilkörpers (2, 3) auf das Einlassrohr und auf das Abflussrohr des Strömungskanals (50, 51),
- betätigen des Aktors (29) von außerhalb der Abwasserleitung (47), um den Aktor zu sperren, um das erste langgestreckte hohle Element (2) und das zweite langgestreckte hohle Element (3) im Strömungskanal (51,51) zu fixieren, und
- wahlweise entfernen von einem vom angeschlossenen äußeren Aufzugsteil (44) und/oder der Vorrichtung zum Betrieb des Aktors (37; 37'), die zum Absenken der Doppelventilvorrichtung (1) und zur Betätigung des Aktors benutzt werden, und
- wahlweise heben der Doppelventilvorrichtung von der Abwasserleitung, indem der Aktor durch den Einsatz von einer bereits montierten oder erneut montierten Vorrichtung zum Betrieb des Aktors freigeschaltet und unter Verwendung von einem an der Vorrichtung zum Betrieb des Aktors befestigten äußeren Aufzugsteil gezogen wird.

## Revendications

1. Un dispositif à double soupape (1) destiné à être monté dans un canal d'écoulement d'un égout (47) pour empêcher le reflux, l'égout (47) a un conduit d'entrée (50) et un conduit de décharge (51) pour des eaux usées et/ou de l'eau, le dispositif à double soupape (1) comprend un corps de soupape creux allongé (2,3) et un actionneur (28) dans lequel
- le corps de soupape creux allongé (2,3) inclut un premier élément creux allongé (2) définissant un premier canal (2a) et un second élément creux allongé (3) définissant un second canal (3a) opposé au premier canal (2a),
- le premier élément creux allongé (2) a une première soupape à clapet (20) mobile de manière pivotante entre un état fermé et un état ouvert d'une première ouverture de soupape (55) du premier élément creux allongé (2), et
- le second élément creux allongé (3) a une seconde soupape à clapet (27) mobile de manière pivotante entre un état fermé et un état ouvert d'une seconde ouverture de soupape (57) du second élément creux allongé (3), laquelle seconde ouverture de soupape (57) est située face à la première ouverture de soupape (55)
- **caractérisé en ce que**
- l'actionneur (28) est relié de façon opérationnelle au corps de soupape creux allongé (2,3) afin de permettre d'ajuster la distance entre le premier élément creux allongé (2) et le second élément creux allongé (3) lors de l'actionnement.

2. Un dispositif à double soupape (1) selon la revendication 1, **caractérisé en ce que** l'actionneur (28) comprend un ou plus d'un mécanisme à genouillère (29), une tige, un moteur électrique, un mécanisme à ressort, un moteur pneumatique ou un moteur hydraulique.

3. Un dispositif à double soupape (1) selon les revendications 1 ou 2, **caractérisé en ce que** l'actionneur (28) est relié de façon opérationnelle au corps de soupape creux allongé (2,3) moyennant un organe coulissant (4,9), dans lequel l'organe coulissant (4,9) a
- un élément à barre (6,10)
- un premier élément de couplage (5a',5a") lié au premier élément creux allongé (2), et
- un second élément de couplage (5b',5b") lié au second élément creux allongé (3), et dans lequel
- au moins un parmi le premier élément de couplage (5a',5a") et le second élément de couplage (5b',5b") sont montés de façon déplaçable sur l'élément à barre (6,10).

4. Un dispositif à double soupape (1) selon l'une quelconque des revendications 2 ou 3, **caractérisé en ce que** le mécanisme à genouillère (29) de l'actionneur (28) a
- un premier élément de liaison (30) fixé de manière pivotante au premier élément de couplage (5a',5a") dans un premier axe de rotation (A1),
- un second élément de liaison (31) fixé de manière pivotante au second élément de couplage (5b',5b") dans un second axe de rotation (A2),
- le premier élément de liaison (30) et le second élément de liaison (31) sont reliés de manière pivotante l'un à l'autre dans un troisième axe de rotation (A3) opposé au respectif premier élément de couplage (5a',5a") et au second élément de couplage (5b',5b"), et
- un troisième élément de liaison (33) ayant une extrémité libre (34) et une extrémité opérationnelle opposée (35), laquelle extrémité opérationnelle opposée (35) est reliée à au moins un parmi le premier élément de liaison (30) ou le second élément de liaison (31), facultativement en connexion avec le troisième axe de rotation (A3), pour écarter le premier axe de rotation (A1) et le second axe de rotation (A2) le long de l'élément à barre (4,9).

5. Un dispositif à double soupape selon les revendications 3 ou 4, **caractérisé en ce que**
- le premier élément de couplage (5a',5a") est au moins un premier conduit ou anneau,
- facultativement le second élément de couplage (5b',5b") est au moins un second conduit ou anneau,
- l'élément à barre (4,9) est au moins une barre (4,9) qui s'étende à travers ledit au moins un premier conduit ou anneau pour permettre le glissement des éléments de couplage premiers (5a',5a") sur l'élément à barre (4,9) afin de déplacer le premier élément creux allongé (2) et le second élément creux allongé (3) l'un par rapport à l'autre avec un mouvement avant arrière en faisant fonctionner l'actionneur (29),
- facultativement l'élément à barre (6,9) est fixé au premier élément creux allongé (2) directement ou à travers le premier élément de couplage (5a',5a").

6. Un dispositif à double soupape (1) selon l'une quelconque des revendications précédentes 1 - 5, **caractérisé en ce que**
- le premier élément creux allongé (2) a un premier flotteur (16) relié de façon opérationnelle à la première soupape à clapet (20) pour ouvrir et fermer le premier canal (2a) en réponse à des changements dans le débit de liquide ou dans le niveau de liquide dans au moins un parmi le canal d'écoulement (50,51), o l'égout (47), et
- le second élément creux allongé (3) a un second flotteur (23) relié de façon opérationnelle à la seconde soupape à clapet (27) pour ouvrir et fermer le second canal (3a) en réponse à des changements dans le débit de liquide ou dans le niveau de liquide dans au moins un parmi le canal d'écoulement (50,51), o l'égout (47).

7. Un dispositif à double soupape (1) selon l'une quelconque des revendications précédentes 1 - 6, **caractérisé en ce que**
- le premier élément creux allongé (2) a une première extrémité inclinée (52) dans la première ouverture de soupape (55),
- facultativement le second élément creux allongé (3) a une seconde extrémité inclinée (53) dans la seconde ouverture de soupape (57).

8. Un dispositif à double soupape (1) selon les revendications 6 - 7, **caractérisé en ce que** le premier élément creux allongé (2) a un premier support de suspension (12) relié de façon opérationnelle à un premier bras pivotant (14) fourni sur le premier flotteur (16), lequel premier bras pivotant (14) est relié de façon opérationnelle à la première soupape à clapet (20), facultativement à travers une première articulation (19), et le second élément creux allongé (3) a un second support de suspension (13) relié de façon opérationnelle à un second bras pivotant (21) fourni sur le second flotteur (23), lequel second bras pivotant (21) est relié de façon opérationnelle à la seconde soupape à clapet (27), facultativement à travers une seconde articulation (26).

9. Un dispositif à double soupape (1) selon l'une quelconque des revendications précédentes 3 - 8, **caractérisé en ce que** l'organe coulissant (4,9) comprend
- au moins deux éléments à barre (6, 10) ayant un axe de barre essentiellement parallèle, et
- au moins un second élément de couplage (5b',5b") pour chaque élément à barre (6, 10), et facultativement au moins un premier élément de couplage (5a',5a") pour chaque élément à barre (6,10).

10. Un dispositif à double soupape (1) selon l'une quelconque des revendications précédentes 1 - 9, **caractérisé en ce que** l'actionneur a une tige faisant saillie (46) pour maintenir un flotteur (16) soulevé pendant l'abaissement du dispositif à double soupape (1) dans l'égout (47).

11. Un dispositif à double soupape (1) selon l'une quelconque des revendications précédentes 6 - 10, **caractérisé en ce que**, lorsqu'un flotteur (16,23) est dans sa position abaissée, la soupape à clapet (20,27) associée est dans un état ouvert d'une ouverture de soupape (55, 57) respective du respectif élément creux allongé (2,3) et, lorsqu'un flotteur (16, 23) est dans sa position soulevée, la soupape à clapet associée (20, 27) est dans un état fermé d'une ouverture de soupape respective (55, 57) du respectif élément creux allongé (2, 3).

12. Un dispositif à double soupape (1) selon l'une quelconque des revendications précédentes 1 - 11, **caractérisé en ce que** le dispositif à double soupape (1) comprend un dispositif d'opération d'actionneur (37 ; 37').

13. Un dispositif à double soupape (1) selon l'une quelconque des revendications précédentes 4 - 12, **caractérisé en ce que** l'extrémité libre (34) du troisième élément de liaison (33) a un élément de couplage (36) pour le couplage d'un dispositif d'opération d'actionneur (37 ; 37'), le dispositif d'opération d'actionneur (37 ; 37') comprend
- un mécanisme de serrage flexible (38 ; 38') adapté pour être attaché au troisième élément de liaison (33),
- un tube de guidage vertical (41 ; 41') pour recevoir un élément d'actionnement allongé (42) pour enfoncer le troisième élément de liaison (33) de l'actionneur depuis l'extérieur de l'égout (27), afin de séparer le premier élément creux allongé (2) et le second élément creux allongé (3) l'un par rapport à l'autre et au moins en partie dans l'intérieur du conduit d'entrée et du conduit de décharge du canal d'écoulement (50, 51) de l'égout (47), et
- un élément élévateur (43).

14. Un dispositif à double soupape (1) selon la revendication 13, **caractérisé en ce que**
- le mécanisme de serrage flexible (38) a une première patte de serrage (39) reliée à charnière à une seconde patte de serrage (40) de façon à coupler et découpler de manière pivotante l'élément de couplage (46) du troisième élément de liaison (33), et facultativement l'élément élévateur (43) inclut un crochet ou oeillet, adapté pour coopérer avec un élément élévateur extérieur (44) pour séparer la première patte de serrage (39) et la seconde patte de serrage (40) afin de découpler l'élément de couplage (46) du troisième élément de liaison (33), ou
- le mécanisme de serrage flexible (38') a une première patte de serrage courbe (39') s'étendant avec une forme de S dans une seconde patte de serrage courbe (40') de façon à enclencher de manière résiliente afin de coupler et découpler l'élément de couplage (46) du troisième élément de liaison (33), et facultativement l'élément élévateur (43') inclut un orifice (43') à travers le conduit vertical (41') pour la fixation d'un élément élévateur extérieur (44).

15. Un procédé pour empêcher le reflux dans un égout (47) en utilisant le dispositif à double soupape (1) selon l'une quelconque des revendications précédentes 1 - 14, lequel procédé comprend les étapes de
- fournir le dispositif à double soupape (1) dans une condition non actionnée de l'actionneur (29),
- abaisser le dispositif à double soupape (1) dans l'égout (47) jusqu'à une position d'utilisation en utilisant un élément élévateur extérieur attaché (44) et sans desserrer ledit élément élévateur extérieur attaché (44) pendant l'abaissement,
- aligner le premier élément creux allongé (2) et le second élément creux allongé (3) du corps de soupape creux allongé (2, 3) avec le conduit d'entrée et le conduit de décharge du canal d'écoulement (50, 51),
- actionner l'actionneur (29) depuis l'extérieur de l'égout (47) pour bloquer l'actionneur afin de fixer le premier élément creux allongé (2) et le second élément creux allongé (3) dans le canal d'écoulement (51,51), et
- facultativement détacher l'un quelconque parmi l'élément de portance extérieur attaché (44) et/ou le dispositif d'opération d'actionneur (37 ; 37') utilisé pour abaisser le dispositif à double soupape (1) et pour actionner l'actionneur, et
- facultativement soulever le dispositif à double soupape de l'égout en débloquant l'actionneur en utilisant un dispositif d'opération d'actionneur déjà monté ou monté à nouveau et tirant en utilisant un élément élévateur extérieur attaché au dispositif d'opération d'actionneur.
